# EUROPÄISCHE PATENTSCHRIFT

(11) **EP 0 774 410 B1**
(45) Veröffentlichungstag und Bekanntmachung des Hinweises auf die Patenterteilung: **12.04.2000**
(21) Anmeldenummer: 96115188.3
(22) Anmeldetag: 21.09.1996
(51) Int. Cl.: B64C 1/38, B64D 13/08, B64C 3/36

(54) **System zur Reduzierung der in einem Luftfahrzeug während des Flugbetriebes eingekoppelten Wärme**
System to reduce the heat in an aircraft produced during flight
Système pour réduire la chaleur dans un aéronef, produite pendant le vol

(30) Priorität: 17.11.1995 DE 19542843
(43) Veröffentlichungstag der Anmeldung: 21.05.1997
(73) Patentinhaber: DaimlerChrysler Aerospace Airbus Gesellschaft mit beschränkter Haftung, 21129 Hamburg (DE)
(72) Erfinder: Lutzer, Wilhelm, Dipl.-Ing., 22589 Hamburg (DE)
(74) Vertreter: Hansmann, Dierk, Dipl.-Ing.

(56) Entgegenhaltungen:
- EP-A- 0 629 548
- FR-A- 2 609 686
- GB-A- 768 975
- US-A- 2 755 638
- US-A- 4 923 146

## Beschreibung

Die Erfindung betrifft ein System zur Reduzierung der in einem Luftfahrzeug, insbesondere Überschallflugzeug, während des Flugbetriebes eingekoppelten Wärme, die durch eine ständige Aufheizung aufgrund aerodynamischer Reibung der Oberfläche an der das Luftfahrzeug umgebenden Luft und durch Kompressionswärme in Staupunkt und an Staukanten sowie bei der Kompression der Außenluft auf Kabinendruckniveau zur Klimatisierung der Kabine entsteht, wobei die verbrauchte Luft aus der Kabine zwischen die Kabinenpaneele und die Aussenhaut des Luftfahrzeuges zur Aufnahme der durch die Aussenhaut strömenden Wärme und zur Aufheizung auf nahezu das Temperaturniveau der Außenhaut geleitet wird.

Im Gegensatz zu Unterschallflugzeugen erfahren Überschallflugzeuge während des Fluges ständig eine Aufheizung durch aerodynamische Reibung der Oberfläche an der das Flugzeug umgebenden Luft und durch Kompressionswärme in Staupunkt und an Staukanten. Neben der Aufheizung durch die Flugzeugaußenhaut entsteht in einer Flugzeugkabine auch eine erhebliche Wärmemenge bei der Kompression der Außenluft zur Klimatisierung auf Kabinendruckniveau. Um innerhalb der Kabine ein erträgliches Temperaturniveau zu halten, muß die Wärme absorbiert und/oder abgeführt werden. Zur Abfuhr der Wärme eignet sich der Kraftstoff gleichermaßen als Wärmesenke aufgrund seiner hohen spezifischen Wärmekapazität und als Wärmeabfuhr durch Verbrauch, d. h. durch seine Verbrennung. Allerdings wird der Treibstoff, der in großen und bei Überschallflugzeugen auch in besonders flachen Flügeln gelagert wird, durch die Reibungswärme an der Außenhaut der Flügel ebenfalls erwärmt, so daß der zur Verbrennung vorgesehene Treibstoff mit zunehmender Flugzeit immer weniger Wärme aufnehmen und abführen kann. Es ist bekannt, die geschilderte Erwärmung des Treibstoffes durch thermische Isolierung der Flügel mittels Isoliermaterial zu reduzieren.

Der Erfindung liegt nun die Aufgabe zugrunde, ein System zur Reduzierung der in einem Luftfahrzeug während des Flugbetriebes eingekoppelten Wärme zu schaffen, bei dem ein Teil der durch die Außenhaut zufließenden Wärme abgeführt wird, bevor sie bereits die Flugzeugkabine und den in den Flugzeugflügeln gelagerten Treibstoff erreichen und erwärmen kann.

Die Aufgabe wird erfindungsgemäß dadurch gelöst, daß Filtereinrichtungen vorgesehen sind, denen die aufgeheizte verbrauchte Kabinenluft zur Filterung zugeführt wird und denen mindestens eine Turbine zur Entspannung und Abkühlung der Kabinenluft nachgeordnet ist, und daß die entspannte und abgekühlte Kabinenluft zur Aufnahme und Abfuhr der durch die Flügelunterseite eingebrachten Wärme durch Hohlräume geführt wird, die sich zwischen den Treibstofftanks und der Unterseite des zugehörigen Flügels befinden.

Vorteilhafterweise können der bzw. den Turbinen, durch deren Verwendung eine Entspannung und Abkühlung der verbrauchten Kabinenluft auf erforderliche und durch die gewünschte Reduzierung der in einem Flugzeug eingekoppelten Wärme bestimmte Werte ermöglich werden, Generatoren zur Erzeugung von elektrischer Energie nachgeordnet sein.

Ausgestaltungen der Erfindung bestehen darin, daß die die Hohlräume durchströmende entspannte und abgekühlte Kabinenluft nach Aufnahme der durch die Flügelunterseite zugeführten Wärme direkt an die Umgebung des Luftfahrzeuges abgegeen wird oder daß diese aus den Hohlräumen austretende Kabinenluft als Kühlmittel für einen an einem Triebwerk angeordneten Zapfluft-Kühler verwendet wird.

Für den Fall, daß die entspannte und abgekühlte Kabinenluft nicht die gesamte über den Flügel einströmende Wärme aufnehmen kann, da sie vor Erreichen des Flügelendes annähernd Hauttemperatur besitzt, ist eine weitere Ausgestaltung der Erfindung darin zu sehen, daß die die Hohlräume durchströmende Kabinenluft nach Aufnahme der durch die Flügelunterseite zugeführten Wärme ein zweites Mal entspannt und abgekühlt sowie nochmals zur Aufnahme und Abfuhr der durch die Flügelunterseite zugeführten Wärme durch die Hohlräume geführt wird.

In der Zeichnung ist ein Ausführungsbeispiel der Erfindung schematisch dargestellt. Es zeigt:

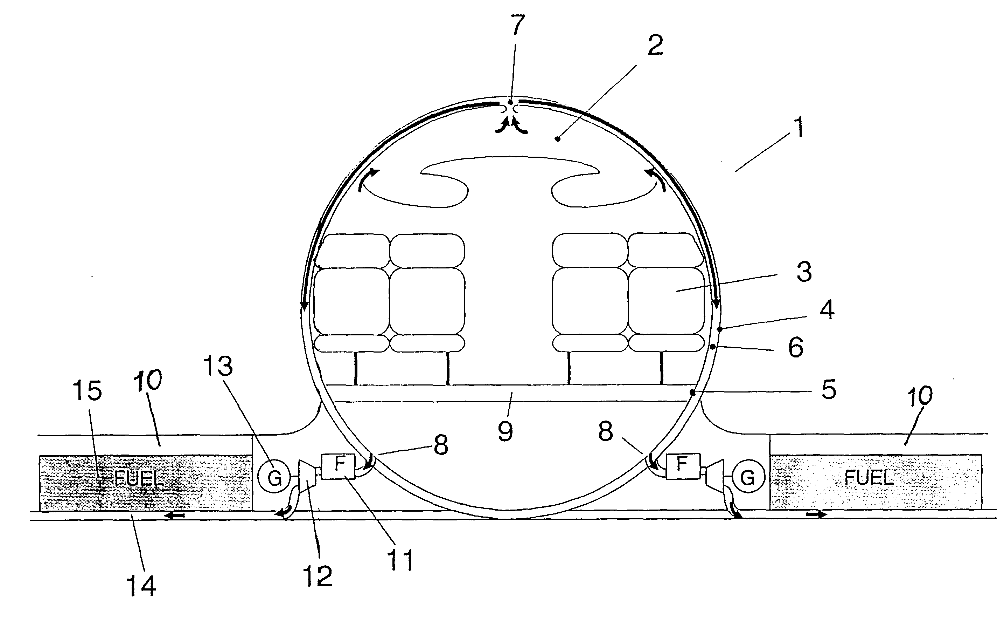

- Fig. 1: einen Schnitt durch den Rumpf eines Flugzeuges in seinem Flügelanschlußbereich.

Die aus der Zeichnung ersichtliche Flugzeugkabine 1 weist in ihrem Innenraum 2 eine Reihe von Sitzen 3 auf und ist durch an der Außenhaut 4 des Flugzeuges angebrachte Kabinenpaneele 5 begrenzt. Kabinenpaneele 5 und Außenhaut 4 befinden sich in einem vorgegebenen Abstand voneinander entfernt, wobei der gebildete Zwischenraum 6 mit dem Kabineninnenraum 2 über im oberen Kabinenteil befindliche Öffnungen 7 in Verbindung steht. Durch die Öffnungen 7 wird die im allgemeinen warme Kabinenluft, wie durch die in Fig. 1 dargestellten Pfeile symbolisiert wird, in den Zwischenraum 6 geleitet. Beim Durchströmen des Zwischenraumes 6 wird die verbrauchte Kabinenluft aufgrund der durch die Außenhaut eingekoppelten Reibungswärme weiter erwärmt. Aus dem Zwischenraum 6 tritt die verbrauchte Kabinenluft durch Öffnungen 8 aus, die in der Außenhaut 4 unterhalb des Fußbodens 9 angeordnet sind und die über nicht näher bezeichnete Luftkanäle mit in den Flügeln 10 angeordneten Filtereinrichtungen 11 in Verbindung stehen.

Jeder Filtereinrichtungen 11 ist jeweils eine Turbine 12 nachgeordnet, in der die gefilterte Kabinenluft entspannt und abgekühlt wird. Von den Turbinen 12 aus, die vorteilhafterweise jeweils einen Generator 13 zur Erzeugung von elektrischer Energie antreiben, gelangt die entspannte und abgekühlte Kabinenluft über nicht näher bezeichnete Kanäle in Hohlräume 14, die sich zwischen den in den Flügeln 10 angeordneten Treibstofftanks 15 und der Unterseite des zugehörigen Flügels 10 befinden. Beim Durchströmen der Hohlräume 14 wird die durch die Reibung der Luft an der Flügelunterseite entstehende Wärme aufgenommen, bevor sie den Treibstoff erwärmen kann und abgeführt. Auch ist es möglich, daß die die Hohlräume 14 durchströmende Kabinenluft nach Aufnahme der eingebrachten Wärme ein zweites Mal entspannt und dadurch abgekühlt sowie zur Aufnahme und Abfuhr weiterer Wärme verwendet wird.

Nach einem kurzem Überschallflug ist im allgemeinen bereits soviel Treibstoff verbraucht, daß zwischen der Treibstoffoberfläche und der beispielsweise durch die Flügeloberseite gebildeten Tankoberseite eine Luftschicht besteht. Somit brauchen vorteilhafterweise nur Tankzonen gekühlt zu werden, in denen der Treibstoff direkten Kontakt mit der Tankwandung bzw. deren Isolation hat. Dieses ist bei konventioneller Flügelauslegung die Unterseite der Flügel 10.

Zur Abschätzung der erforderlichen Kühlleistung und als Grundlage für eine überschlägige Berechnung der abführbaren Wärme kann eine Untersuchung dienen, in der die Wärmelasten und zwei Klimatisierungskonzepte mit unterschiedlichem Luftbedarf dargestellt sind. Zum Beispiel werden über die Außenhaut eines Flugzeuges insgesamt 33,6 kW Wärme eingekoppelt, die sich aus 19700 W für die Kabinenreibungswärme, 6400 W für die Kabinensonnenbestrahlungswärme und 7500 W für die Frachtraumreibungswärme zusammensetzen. Hierdurch wird die innerhalb des Flugzeugrumpfes befindliche Luft nach der Formel ΔT = Q / (ṁ * cp) mit
- Q =: Wärmestrom [kW]
- ṁ =: Massenstrom [kg/s]
- cp =: spez. Wärme [kJ/kgK]
aufgeheizt. Bei einem cp-Wert von etwa 1 sowie bei vorgegebenen ṁ = 2,38 kg/s (1. Konzept) bzw. ṁ = 1,45 kg/s (2. Konzept) erreicht die Luft innerhalb des Rumpfes nach Umströmen der Außenhaut Temperaturen von 44 bzw. 53°C. Wird diese Luft in einer Turbine 12 entspannt, so kann zunächst ihre Temperatur gesenkt und zugleich mechanische oder über einen Generator 13 elektrische Energie gewonnen werden. Die Entspannung sollte allerdings wegen Vereisungsgefahr oberhalb von 0 °C enden. Werden hierzu 5°C als untere Temperaturgrenze angenommen, so ergibt sich die nutzbare Energie nach der Formel P = ṁ * cp * ΔT, und zwar bei cp ≈ 1
mit ΔT = 39°C und ṁ = 2,38 kg/s zu P = 93 kW (1. Konzept) und mit ΔT = 48°C und ṁ = 1,45 kg/s zu P = 70 kW (2. Konzept).

Die Fähigkeit der Wärmeaufnahme der entspannten Luft, d.h. der Wärmestrom Q ergibt sich, wenn die Luft auf maximal 80°C aufgeheizt werden darf und somit ΔT = (80 - 5)°C = 75 K beträgt, nach der Formel Q = ṁ * cp * ΔT zu 179 kW für das erste Konzept und zu 109 kW für das zweite Konzept. Die Abschätzung der über den Flügel 10 eingekoppelten Wärme, d. h. der Wärmestrom Q errechnet sich nach der Formel Q = A * k * ΔT zu 217 kW mit einer Flügelfläche A = 836 m², mit einem Wärmeübergangswert k = 0,005 kW / m² * K sowie mit einer mittleren Temperaturdifferenz ΔT = 52 K.

### Bezugszeichenliste

- 1: Flugzeugkabine
- 2: Innenraum der Flugzeugkabine 1
- 3: Sitze
- 4: Außenhaut der Flugzeugkabine 1
- 5: Kabinenpaneele

- 6: Zwischenraum zw. Außenhaut 4 und Kabinenpaneele 5
- 7: Öffnungen zw. Kabineninnenraum 2 und Zwischenraum 6
- 8: Öffnungen zw. Zwischenraum 6 u. Filtereinrichtungen 11
- 9: Fußboden
- 10: Flügel

- 11: Filtereinrichtung
- 12: Turbine
- 13: Generator
- 14: Hohlräume
- 15: Treibstofftank

## Patentansprüche

1. System zur Reduzierung der in einem Luftfahrzeug, insbesondere Überschallflugzeug, während des Flugbetriebes eingekoppelten Wärme, die durch eine ständige Aufheizung aufgrund aerodynamischer Reibung der Oberfläche an der das Luftfahrzeug umgebenden Luft und durch Kompressionswärme in Staupunkt und an Staukanten sowie bei der Kompression der Außenluft auf Kabinendruckniveau zur Klimatisierung der Kabine (1) entsteht, wobei die verbrauchte Luft aus der Kabine zwischen die Kabinenpaneele (5) und die Außenhaut (4) des Luftfahrzeuges zur Aufnahme der durch die Außenhaut (4) strömenden Wärme und zur Aufheizung auf nahezu das Temperaturniveau der Außenhaut (4) geleitet wird, dadurch gekennzeichnet, daß Filtereinrichtungen (11) vorgesehen sind, denen die aufgeheizte verbrauchte Kabinenluft zur Filterung zugeführt wird und denen mindestens eine Turbine (12) zur Entspannung und Abkühlung der Kabinenluft nachgeordnet ist, und daß die abgekühlte und entspannte Kabinenluft zur Aufnahme und Abfuhr der durch die Flügelunterseite eingebrachten Wärme durch Hohlräume (14) geführt wird, die sich zwischen den Treibstofftanks (15) und der Unterseite des zugehörigen Flügels (10) befinden.

2. System nach Anspruch 1, dadurch gekennzeichnet, daß die Turbinen (12) Generatoren (13) zur Erzeugung von elektrischer Energie antreiben.

3. System nach Anspruch 1, dadurch gekennzeichnet, daß die die Hohlräume (14) durchströmende entspannte und abgekühlte Kabinenluft nach Aufnahme der durch die Flügelunterseite zugeführten Wärme direkt an die Umgebung des Luftfahrzeuges abgegeben wird.

4. System nach Anspruch 1, dadurch gekennzeichnet, daß die aus den Hohlräumen (14) austretende Kabinenluft als Kühlmittel für einen an einem Triebwerk angeordneten Zapfluft-Kühler verwendet wird.

5. System nach einem der Ansprüche 1 bis 4, dadurch gekennzeichnet, daß die die Hohlräume (14) durchströmende entspannte und abgekühlte Kabinenluft nach Aufnahme der durch die Flügelunterseite zugeführten Wärme ein zweites Mal entspannt und abgekühlt sowie nochmals zur Aufnahme und Abfuhr der durch die Flügelunterseite zugeführten Wärme durch die Hohlräume (14) geführt wird.

## Claims

1. System for reducing the heat introduced in an aircraft, in particular a supersonic aircraft, during flight and arising as a result of a continuous temperature rise due to aerodynamic friction between the surface and the air surrounding the aircraft and as a result of the heat of compression at the stagnation point and at ram edges as well as during compression of the outside air to cabin pressure level for air conditioning of the cabin (1), wherein the spent air from the cabin is directed between the cabin panels (5) and the outer skin (4) of the aircraft for absorption of the heat flowing through the outer skin (4) and for heating to virtually the temperature level of the outer skin (4), characterized in that filter devices (11) are provided, to which the heated spent cabin air is supplied for filtering and disposed downstream of which is at least one turbine (12) for expanding and cooling the cabin air, and that the cooled and expanded cabin air, for absorption and removal of the heat introduced through the lower wing surface, is conveyed through cavities (14), which are situated between the fuel tanks (15) and the lower surface of the associated wing (10).

2. System according to claim 1, characterized in that the turbines (12) drive generators (13) for generating electrical power.

3. System according to claim 1, characterized in that the expanded and cooled cabin air flowing through the cavities (14), after absorption of the heat supplied through the lower wing surface, is discharged directly into the environment of the aircraft.

4. System according to claim 1, characterized in that the cabin air exiting from the cavities (14) is used as a coolant for an air-dispensing cooler disposed at an engine.

5. System according to one of claims 1 to 4, characterized in that the expanded and cooled cabin air flowing through the cavities (14), after absorption of the heat supplied through the lower wing surface, is expanded and cooled a second time as well as conveyed once more through the cavities (14) for absorption and removal of the heat supplied through the lower wing surface.

## Revendications

1. Système de réduction de la chaleur dégagée dans un avion, en particulier un avion supersonique, au cours du vol, qui est produite par un échauffement permanent dû au frottement aérodynamique de la surface sur l'air entourant l'avion et par la chaleur de compression au point mort et sur les bords d'impact ainsi que par compression de l'air extérieur au niveau de pression de la cabine (1) pour climatiser celle-ci, système dans lequel l'air consommé est acheminé de la cabine entre les panneaux (5) de la cabine et la coque extérieure (4) de l'avion pour absorber la chaleur s'écoulant à travers la coque extérieure (4) et se chauffer presque au niveau de température de la coque extérieure (4), caractérisé en ce qu'il est prévu des dispositifs de filtration (11) auxquels l'air consommé et chauffé de la cabine est acheminé pour être filtré et en aval desquels est agencée au moins une turbine (12) de détente et de refroidissement de l'air de la cabine, et l'air refroidi et détendu de la cabine est acheminé, pour absorber et évacuer la chaleur délivrée par la partie inférieure de l'aile, à travers des cavités qui sont situés entre le réservoir de carburant (15) et la partie inférieure de l'aile correspondante (10).

2. Système selon la revendication 1, caractérisé en ce que les turbines (12) entraînent des générateurs (13) de production d'énergie électrique.

3. Système selon la revendication 1, caractérisé en ce que l'air détendu et refroidi de la cabine s'écoulant à travers les cavités (14) est directement évacué à l'extérieur de l'avion après absorption de la chaleur acheminée par la partie inférieure de l'aile.

4. Système selon la revendication 1, caractérisé en ce que l'air de la cabine sortant des cavités (14) est utilisé comme agent réfrigérant pour un refroidisseur d'air distributeur agencé sur un organe moteur.

5. Système selon l'une quelconque des revendications 1 à 4, caractérisé en ce que l'air détendu et refroidi de la cabine s'écoulant à travers les cavités (14) est une seconde fois détendu et refroidi après absorption de la chaleur acheminée par la partie inférieure de l'aile et ré-acheminé à travers les cavités (14) pour absorber et évacuer la chaleur acheminée par la partie inférieure de l'aile.
